# EUROPÄISCHE PATENTSCHRIFT

(11) **EP 0 841 779 B1**
(45) Veröffentlichungstag und Bekanntmachung des Hinweises auf die Patenterteilung: **04.05.2005**
(21) Anmeldenummer: 97117362.0
(22) Anmeldetag: 08.10.1997
(51) Int. Cl.: H04L 12/43, H04L 29/02, H04L 12/12, B60R 16/02

(54) **Verfahren zum Betreten und Verlassen eines Stromsparbetriebs eines Teilnehmers in einem ringförmigen Kommunikationsnetz**
Method used by a participant in a ring communication network to enter and leave an energy saving mode
Méthode permettant à l'un des participants à un réseau de communication en anneau d'entrer et de sortir d'un mode économie d'énergie

(30) Priorität: 11.10.1996 DE 19642265
(43) Veröffentlichungstag der Anmeldung: 13.05.1998
(73) Patentinhaber: BECKER GmbH, 76307 Karlsbad (DE); OASIS SiliconSystems Holding AG, 76185 Karlsruhe (DE)
(72) Erfinder: Stiegler, Andreas, 76275 Ettlingen (DE); Hetzel, Herbert, 76889 Schwaigern (DE); Heck, Patrick, 76448 Durmersheim (DE)
(74) Vertreter: Patentanwälte Westphal, Mussgnug & Partner

(56) Entgegenhaltungen:
- EP-A- 0 725 522
- EP-B- 0 515 042
- US-A- 5 384 564

## Beschreibung

Die Erfindung betrifft ein Verfahren zum Betreten und Verlassen eines Stromsparbetriebs eines Teilnehmers in einem ringförmigen Kommunikationsnetz, in dem Daten in einem Format übertragen werden, welches eine getaktete Folge von einzelnen Bitgruppen gleicher Länge vorschreibt, in denen bestimmte Bitpositionen für eine Präambel reserviert sind, die in einer Empfangsschaltung jedes Teilnehmers decodiert wird. Weiterhin ist die Erfindung auf die Verwendung eines solchen Verfahrens gerichtet

Die Teilnehmer des Kommunikationsnetzes sind Datenquellen und -senken, die über Datenleitungen miteinander verbunden sind, die eine Ringleitung bilden. Über die Ringleitung können sowohl Quell- als auch Steuerdaten zwischen den Teilnehmern übertragen werden, indem die Bitgruppen in Teil-Bitgruppen unterteilt werden, die jeweils einen Datenkanal bilden. Das Taktsignal wird von einem einzigen Teilnehmer generiert und in Form von bestimmten Präambelcodes, die jeweils den Anfang eines Blocks kennzeichnen, zu dem jeweils mehrere Bitgruppen zusammengefaßt sind, über das Netz gesendet. Alle anderen Teilnehmer erkennen den Blockanfangscode und synchronisieren sich anhand aufeinanderfolgender Blockanfangscodes auf das Taktsignal. Davon zu unterscheiden sind rein paketorientierte Datenübertragungsverfahren wie z.B. ATM-Verfahren, d h asynchrone Übertragungsverfahren.

Ein solches ringförmiges Kommunikationsnetz, wie es beispielsweise in der EP-A-0 725 522 beschrieben ist, dient zur Vernetzung verschiedenartiger elektrischer und elektronischer Gerate, die in teilweise komplizierter Weise untereinander Informationen austauschen sollen, mit Hilfe von physisch einfach aufgebauten Datenleitungen Über diese Datenleitungen können die Teilnehmer sowohl Quelldaten als auch Steuerdaten austauschen Beispielsweise im Audiobereich können Audiodaten von Datenquellen wie CD-Spielern, Radioempfangern und Kassettenrecordern an Datensenken wie Verstarker-Lautsprecher-Kombinationen übertragen werden, und gleichzeitig können Steuerdaten übertragen werden, beispielsweise zur Steuerung der Lautstärke. Dabei kann ein Gerät gleichzeitig als Datenquelle und -senke ausgebildet sein, wie es beispielsweise bei einem Kassettenrecorder der Fall ist.

Zur Realisierung von Stromsparfunktionen in einem derartigen Kommunikationsnetz wurden bisher einzelne Teilnehmer auf externen Befehl oder nach Ablauf einer voreingestellten Zeit der Untätigkeit vollständig ausgeschaltet. Um einen ausgeschalteten Teilnehmer zu reaktivieren, mußte das gesamte Netz ausgeschaltet und wieder eingeschaltet werden.

Es ist wünschenswert, daß ein deaktivierter Teilnehmer bei Bedarf reaktivierbar ist, insbesondere durch einen Teilnehmer, der das Netzwerk verwaltet, ohne das gesamte Netz ausschalten und wieder einschalten zu müssen bzw. ohne einen Reset durchzufuhren.

Zu diesem Zweck gibt es spezielle Aufweck-Schaltungen, die das Signal auf einer Datenleitung überwachen und die auf ein bestimmtes moduliertes Signal reagieren, indem sie einen mit der Aufweck-Schaltung verbundenen Teilnehmer wieder einschalten. Eine solche Schaltung, die jeder Teilnehmer mit Stromsparfunktion aufweisen muß, ist jedoch relativ aufwendig und nimmt relativ viel Platz in Anspruch.

EP-B-0 515 042 ist ein Kommunikationssystem mit Übertragungslaves bekannt, bei dem von einem Master einzelne Slaves in einem Stromsparbetrieb bis auf die Empfangsschaltung abgeschaltet werden können, wobei durch ein Signal mit speziellem Code diese Slaves wieder eingeschaltet werden können.

Aufgabe der Erfindung ist es, ein Verfahren zu schaffen, mit dem Stromsparfunktionen in einem ringförmigen Kommunikationsnetz auf besonders einfache Weise realisiert werden können

Diese Aufgabe wird bei einem gattungsgemäßen Verfahren erfindungsgemäß dadurch gelöst, daß im Stromsparbetrieb eines Teilnehmers zumindest ein Teil des Teilnehmers eingeschaltet bleibt, der die Empfangsschaltung enthält, und daß wenigstens ein spezieller Präambelcode vorgesehen wird, auf dessen Empfang hin der im Stromsparbetrieb ausgeschaltete Teil des Teilnehmers wieder eingeschaltet wird.

Die Erfindung macht sich zunutze, daß der mögliche Informationsgehalt der Präambel durch die Übertragung des Taktsignals nicht ausgeschöpft wird. Dies gilt im allgemeinen auch dann, wenn mittels der Präambel weitere Informationen übertragen werden, wie die Unterscheidung zwischen linken und rechten Kanälen, wie es beim sogenannten "SPDIF-Format (Sony/Philips-Digital-Interface-Format)" der Fall ist, dem Standard-Datenubertragungsformat fur CD-Spieler Daher gewinnt man mit der Erfindung eine zusatzliche Steuerfunktion, ohne Übertragungskapazitat zu verlieren

Die in jedem Teilnehmer vorhandene Empfangsschaltung muß die Präambel völlig selbsttätig decodieren können, um einen internen Oszillator des Teilnehmers mit dem empfangenen Takt zu synchronisieren. Dazu enthält die Empfangsschaltung irgendeine festverdrahtete Einrichtung, beispielsweise ein Schaltwerk, das mit einem Schieberegister, einer FIFO-Schaltung oder dergleichen verbunden ist, durch das bzw. die jede empfangene Bitgruppe geleitet wird. Mit Hilfe des Schaltwerkes wird ein empfangener Präambelcode beispielsweise als Blockanfangscode erkannt und entsprechend behandelt.

Gemäß der Erfindung wird diese ohnehin vorhandene Empfangsschaltung genutzt, um einen deaktivierten Teilnehmer zu reaktivieren, ohne irgendwelche weiteren Bauelemente zu benötigen. Insbesondere ist es nicht erforderlich, daß ein im Teilnehmer vorhandener Mikroprozessor eingeschaltet bleibt, um irgendein Aufwecksignal erkennen zu können, bzw. man benötigt nicht in jedem Teilnehmer einen Prozessor, wie im Falle einer Verstärker-Lautsprecher-Kombination, die an der Kommunikation im wesentlichen passiv teilnimmt.

Beim Betreten des Stromsparbetriebs eines Teilnehmers brauchen nur die Empfangsschaltung und ein interner Oszillator des Teilnehmers eingeschaltet bleiben; der Rest des Teilnehmers kann ausgeschaltet werden. Zum Verlassen des Stromsparbetriebs auf den Empfang des speziellen Praambelcodes hin betätigt die Empfangsschaltung irgendeinen Schalter, der den Rest des Teilnehmers wieder einschaltet.

Im Stromsparbetrieb muß zwar ein kleiner Rest des Teilnehmers aktiv bleiben, so daß ebenso wie bei einer Verwendung von externen Aufweckschaltungen ein geringer Mindeststrom benötigt wird. Gemäß der Erfindung benötigt ein Teilnehmer mit Stromsparfunktion jedoch keinerlei externe Bauteile, und die internen Änderungen beschränken sich darauf, daß die Empfangsschaltung zusätzlich den Aufweck-Präambelcode erkennt und in der Lage ist, den Rest des Teilnehmers wieder einzuschalten.

Um gezielt bestimmte Teilnehmer reaktivieren zu können, kann es mehrere spezielle Praambelcodes geben, die jeweils einem oder einer Gruppe von Teilnehmern zugeordnet sind, etwa den mit dem Netz verbundenen Verstärker-Lautsprecher-Kombinationen

Die Ringleitung wird vorzugsweise durch Lichtleiter gebildet, die je zwei Teilnehmer miteinander verbinden und die hohe Datenübertragungsgeschwindigkeiten ermöglichen. Im Falle eines Kommunikationssystems in einem Kraftfahrzeug ist außerdem das geringe Gewicht von Lichtleitern besonders vorteilhaft. Die Erfindung ist aber auch für rein elektrische ringförmige Kommunikationsnetze geeignet, bei denen die Leitungsabschnitte beispielsweise Koaxialkabel sind

Es hat sich besonders bewährt, einzelne oder mehrere der Teilnehmer abgesehen vom Taktgeber durch einen Befehl des Taktgenerators in den Stromsparbetrieb zu überführen, wobei aufgrund des zentralen Befehls durch den Taktgenerator diesem stets bekannt ist, ob einer oder mehrere und ggf welche Teilnehmer sich im Stromsparbetrieb befinden und damit bei Bedarf aus diesem Stromsparbetrieb in den Normalbetrieb überführt werden müssen. Auch hat sich bewährt, die Teilnehmer, welche für den Stromsparbetrieb vorgesehen sind, mit einer Einheit zu versehen, die sicherstellt, daß nach einer festgelegten Zeit der Untätigkeit des Teilnehmers, der Teilnehmer in den Stromsparbetrieb übergeht, wobei er bevorzugt dem Taktgenerator vorab diesen Übergang über die Ringleitung mitteilt. Durch diese beiden Arten des Übergangs in den Stromsparbetrieb sind zwei einfache und sichere Verfahren zum Betreten und Verlasen des Stromsparbetriebes von Teilnehmern in einem Komminikationsnetz gegeben.

Die Verwendung der beschriebenen Verfahren erweist sich bei einem Kommunikationssystem in einem Kraftfahrzeug als besonders relevant, da gerade hier der Stromverbrauch der elektrischen Komponenten des Fahrzeugs insbesondere beim Stillstand des Kraftfahrzeuges möglichst niedrig gehalten werden soll. Durch einen möglichst geringen Stromverbrauch läßt sich die Funktionalität des Fahrzeugs auch nach einem längeren Betrieb der elektrischen Komponenten sicher erhalten. Schwache Autobatterien, die insbesondere im Winter beim Starten Ihren Dienst versagen, sind aufgrund des Stromverbrauchs des Kommunikationssystems im Kraftfahrzeug durch diese Erfindung nahezu ausgeschlossen

Die Erfindung wird nachfolgend anhand zweier Ausfuhrungsbeispiele unter Bezugnahme auf die Zeichnung erlautert, in dieser zeigt
- Fig 1: ein ringförmiges Kommunikationsnetz mit vier Teilnehmern, und
- Fig. 2: eine zur Datenübertragung in dem Netz verwendete Bitgruppe

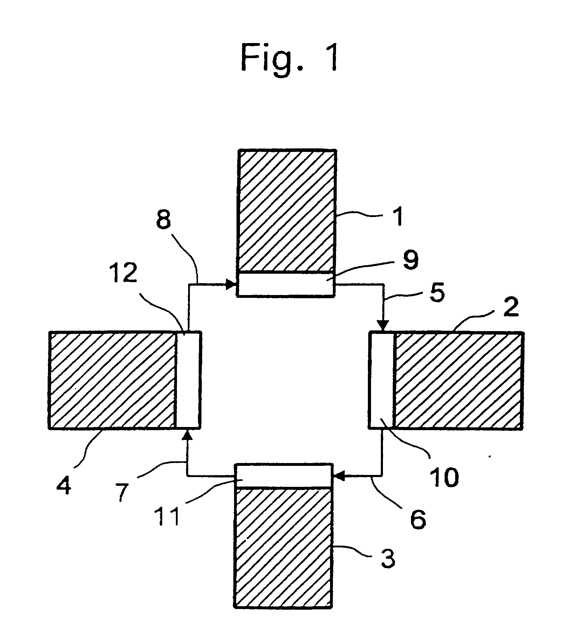

Fig 1 zeigt ein ringförmiges Kommunikationsnetz mit einem als Taktgenerator verwendeten Teilnehmer 1 und drei weiteren Teilnehmern 2, 3 und 4. Die vier Teilnehmer 1 bis 4 sind über Lichtleiter 5 bis 8 ringförmig miteinander verbunden. Die Lichtleiter 5 bis 8 bilden eine Ringleitung zur gemeinsamen Übertragung von Quell- und Steuerdaten zwischen den Teilnehmern 1 bis 4. Die physikalische Richtung der Datenübertragung ist durch Pfeile dargestellt.

Jeder Teilnehmer 1 bis 4 enthält eine Empfangs- und Sendeschaltung 9 bis 12, von denen jeweils zwei über einen der Lichtleiter 5 bis 8 miteinander verbunden sind. Jede Empfangs- und Sendeschaltung 9 bis 12 enthält einen optoelektronischen Wandler zum Empfang optischer Signale aus einem der Lichtleiter und deren Umwandlung in elektrische Signale sowie einen optoelektronischen Wandler zur Umwandlung elektrischer in optische Signale, die dem Lichtleiter zugeführt werden, der mit dem nächsten Teilnehmer im Ring verbunden ist.

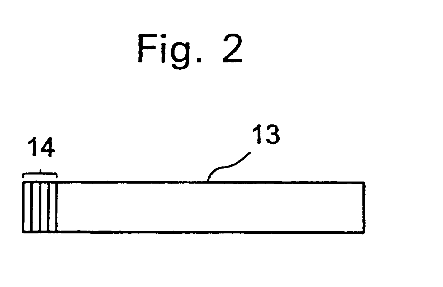

Die empfangenen Signale bestehen in laufend aufeinanderfolgenden Bitgruppen 13, wie in Fig. 2 dargestellt, in denen einzelne Datenkanäle für Quell- oder Steuerdaten gebildet sind. Die ersten vier Bitpositionen jeder Bitgruppe 13 bilden eine Präambel 14.

Jede empfangene Bitgruppe 13 wird in einer Empfangs- und Sendeschaltung 9 bis 12 durch ein Schieberegister, einen FIFO-Speicher oder dergleichen geschoben, um selektiv auf die Bits in der Bitgruppe 13 zugreifen zu können. Die Bits der Präambel 14 werden einem Schaltwerk zugeführt, einer Anordnung von Logikschaltungen, in der die Präambel 14 decodiert wird. D.h es wird anhand der Bits in der Präambel 14 erkannt, daß eine Präambel einen Blockanfang anzeigt, auf den sich ein Oszillator bzw. eine PLL-Schaltung der Teilnehmer 2 bis 4 synchronisiert. Im Falle eines SPDIF-Formates kann anhand der Präambel 14 außerdem erkannt werden, ob eine empfangene Bitgruppe einem linken oder einem rechten Kanal zugeordnet ist.

Die übrigen Bits jeder Bitgruppe 13 können dem elektronischen Gerät des jeweiligen Teilnehmers zugeführt werden, beispielsweise einer Verstärker-Lautsprecher-Kombination, die in der Bitgruppe 13 enthaltene Audiodaten in akustische Signale umwandelt. In diesem Fall wird die Bitgruppe 13 im wesentlichen unverändert durch die Schieberregister geschoben und wieder in die Ringleitung eingespeist Falls das elektronische Gerat beispielsweise ein Autoradio ist, enthalt es in der Regel einen Mikroprozessor, der in die Schieberegister schreiben kann, um z.B. Audiodaten oder Steuerdaten an andere Teilnehmer zu senden Die so geänderten Bitgruppen werden ebenfalls wieder in die Ringleitung eingespeist.

Jede Empfangs- und Sendeschaltung 9 bis 12 enthalt normalerweise einen Schalter für eine direkte elektrische Verbindung der optoelektronischen Eingangs- und Ausgangswandler, wenn der entsprechende Teilnehmer ausgeschaltet wird.

In einem ersten Ausführungsbeispiel wird dieser Schalter nicht betätigt, wenn ein Teilnehmer auf externen Befehl oder nach Ablauf einer voreingestellten Zeit der Untätigkeit einen Stromsparbetrieb betritt. Vielmehr bleibt die Empfangs- und Sendeschaltung einschließlich des internen Oszillators des Teilnehmers in Betrieb, wobei die empfangenen Signale transparent durch das Schieberegister oder dergleichen geschoben und wieder in die Ringleitung eingespeist werden. Das Schaltwerk in der Empfangs- und Sendeschaltung, mit dem die Präambel decodiert wird, bleibt ebenfalls in Betrieb. Abgesehen vom Taktgenerator 1 können alle übrigen Teile jedes Teilnehmers 2 bis 4, in Fig. 1 schraffiert eingezeichnet, abgeschaltet werden

Es wird eine spezielle, noch nicht vergebene Bitfolge als Aufweck-Präambelcode vorgesehen, auf deren Empfang hin das Schaltwerk eines Teilnehmers 2 bis 4 dessen schraffiert gezeichneten Teile wieder einschaltet

Wenn ein anderer Teilnehmer eine Nachricht an diesen Teilnehmer sendet und keine Bestätigung bekommt, sendet er den Aufweck-Praambelcode. Alternativ kann ein Teilnehmer vorsorglich jedesmal dann einen Aufweck-Präambelcode senden, wenn er über eine langere Zeit nicht an den gleichen Teilnehmer gesendet hat.

Die vier Bits der in Fig. 2 gezeigten Praambel erlauben es, mehrere verschiedene Aufweck-Präambeln vorzusehen, z.B. eine zum Aufwecken aller Teilnehmer im Ring, solche zum gezielten Aufwecken einzelner Teilnehmer und ggf. solche zum Aufwecken einer Gruppe von Teilnehmern, beispielsweise aller Lautsprecher.

In einem zweiten Ausfuhrungsbeispiel werden die optoelektronischen Eingangs- und Ausgangswandler direkt elektrisch miteinander verbunden, dh es wird der erwähnte Schalter betätigt, wenn ein Teilnehmer auf externen Befehl oder nach Ablauf einer voreingestellten Zeit der Untätigkeit einen Stromsparbetrieb betritt Die empfangenen Bitgruppen oder zumindest deren erste vier Bitpositionen werden jedoch wie im ersten Ausfuhrungsbeispiel auf den Aufweck-Praambelcode hin überwacht. Abgesehen von den Eingangs- und Ausgangswandlern, die natürlich ständig arbeiten müssen, bleiben in diesem zweiten Ausführungsbeispiel lediglich der Empfangsteil der Empfangs- und Sendeschaltung 9, 10, 11 oder 12 sowie der interne Oszillator in Betrieb, wenn ein Teilnehmer in einen Stromsparbetrieb eintritt.

## Patentansprüche

1. Verfahren zum Stromsparen bei Teilnehmern in einem ringförmigen Kommunikationsnetz, in dem Daten in einem Format übertragen werden, welches eine getaktete Folge von einzelnen Bitgruppen gleicher Länge vorschreibt, in denen bestimmte Bitpositionen für eine Präambel reserviert sind, die in einer Empfangsschaltung jedes Teilnehmers decodiert wird,
**dadurch gekennzeichnet, dass**
beim Betreten des Stromsparbetriebs eines Teilnehmers (1,2,3,4) zumindest ein Teil des Teilnehmers eingeschaltet bleibt, der die Empfangsschaltung (9,10,11,12) enthält, und dass wenigstens zwei spezielle Präambelcodes (14) vorgesehen sind, auf deren Empfang hin der im Stromsparbetrieb ausgeschaltete Teil eines, mehrerer und/oder aller Teilnehmer wieder eingeschaltet wird.

2. Verfahren nach Anspruch 1,
**dadurch gekennzeichnet, dass**
die Empfangsschaltung (9, 10, 11, 12) einen Schalter betätigt, der den ausgeschalteten Teil des Teilnehmers(1,2,3,4) wieder einschaltet, wenn sie den wenigstens einen speziellen Präambelcode (14) empfängt.

3. Verfahren nach Anspruch 1 oder 2
**dadurch gekennzeichnet, dass**
die Präambel (14) durch ein Schaltwerk in der Empfangsschaltung (9, 10, 11, 12) decodiert wird.

4. Verfahren nach einem der vorhergehenden Ansprüche,
**dadurch gekennzeichnet, dass**
beim Betreten des Stromsparbetriebs eines Teilnehmers (1,2,3,4) die Empfangsschaltung (9,10,11,12) und ein interner Oszillator des Teilnehmers eingeschaltet bleiben und der Rest des Teilnehmers ausgeschaltet wird.

5. Verfahren nach einem der vorhergehenden Ansprüche,
**dadurch gekennzeichnet, dass**
es außer den wenigstens zwei speziellen Präambelcodes (14) wenigstens einen weiteren Präambelcode zur Synchronisation der Teilnehmer im Kommunikationsnetz und/oder zur Unterscheidung zwischen linken und rechten Kanälen gibt.

6. Verfahren nach einen der vorhergehenden Ansprüche,
**dadurch gekennzeichnet, dass**
die Daten zwischen je zwei Teilnehmern (1,2,3,4) der Ringleitung optisch über Lichtleiter (5,6,7,8) übertragen werden.

7. Verfahren nach einem der vorhergehenden Ansprüche,
**dadurch gekennzeichnet, dass**
zumindest ein Teil der Teilnehmer (1,2,3,4) durch einen über die Ringleitung übermittelten spezifischen Befehl in den Stromsparbetrieb übergeht.

8. Verfahren nach einem der vorhergehenden Ansprüche,
**dadurch gekennzeichnet, dass**
zumindest ein Teil der Teilnehmer (1,2,3,4) nach einer festgelegten Zeit der Untätigkeit selbstständig in den Stromsparbetrieb übergeht.

9. Verwendung des Verfahrens nach einem der vorhergehenden Ansprüche bei einem Kommunikationssystem in einem Kraftfahrzeug.

## Claims

1. Method of power saving in subscribers in a ring communication network, in which data are transmitted in a format which prescribes a pulsed sequence of individual bit groups of identical length in which specific bit positions are reserved for a preamble which is decoded in a receiving circuit of each subscriber, **characterised in that** when the power-saving mode of a subscriber (1, 2, 3, 4) is entered at least a part of the subscriber containing the receiving circuit (9, 10, 11, 12) remains switched on and that at least two special preamble codes (14) are provided, upon reception of which the part of one, several and/or all subscribers switched off in the power-saving mode is switched on again.

2. Method as claimed in Claim 1, **characterised in that** the receiving circuit (9, 10, 11, 12) actuates a switch by which the part of the subscriber (1, 2, 3, 4) which was switched off is switched on again when the receiving circuit receives the at least one special preamble code (14).

3. Method as claimed in Claim 1 or 2, **characterised in that** the preamble (14) is decoded by a switching mechanism in the receiving circuit (9, 10, 11, 12).

4. Method as claimed in any one of the preceding claims, **characterised in that** when the power-saving mode of a subscriber (1, 2, 3, 4) is entered the receiving circuit (9, 10, 11, 12) and an internal oscillator of the subscriber remain switched on and the remainder of the subscriber is switched off.

5. Method as claimed in any one of the preceding claims, **characterised in that** in addition to the at least two special preamble codes there is at least one further preamble code for synchronisation of the subscribers in the communication network and/or for distinguishing between left-hand and right-hand channels.

6. Method as claimed in any one of the preceding claims, **characterised in that** the data are transmitted optically via optical fibres (5, 6, 7, 8) between two subscribers (1, 2, 3, 4) in each case.

7. Method as claimed in any one of the preceding claims, **characterised in that** at least some of the subscribers (1, 2, 3, 4) change over to the power-saving mode by a specific command conveyed via the ring feeder.

8. Method as claimed in any one of the preceding claims, **characterised in that** at least some of the subscribers (1, 2, 3, 4) change over automatically to the power-saving mode after a fixed period of inactivity.

9. Use of the method as claimed in any one of the preceding claims in a communication system in a motor vehicle.

## Revendications

1. Procédé d'économie de courant auprès des abonnés d'un réseau de communication annulaire, dans lequel des données sont transmises dans un format imposant une séquence cadencée d'ensembles de bits individuels de même longueur, certaines positions de bit dans ces ensembles de bit étant réservées pour un en-tête qui sera décodé dans un circuit de réception de chaque abonné, **caractérisé en ce que**, lors de l'entrée d'un abonné (1, 2, 3, 4) dans un mode d'économie de courant, au moins une partie de l'abonné comprenant le circuit de réception (9, 10, 11, 12) reste connectée, et **en ce qu'**on prévoit au moins deux codes d'entête (14) spécifiques, à la réception desquels la partie déconnectée en mode d'économie de courant d'un, de plusieurs et/ou de tous les abonnés reconnectée.

2. Procédé selon la revendication 1, **caractérisé en ce que** le circuit de réception (9, 10, 11, 12) actionne un interrupteur reconnectant la partie déconnectée de l'abonné (1, 2, 3, 4) lorsque le circuit reçoit le au moins un code d'en-tête spécifique (14).

3. Procédé selon la revendication 1 ou 2, **caractérisé en ce que** l'entête (14) est décodé par le biais d'un circuit séquentiel dans le circuit de réception (9, 10, 11, 12).

4. Procédé selon l'une des revendications précédentes, **caractérisé en ce que**, lors de l'entrée d'un abonné (1, 2, 3, 4) en mode d'économie de courant, le circuit de réception (9, 10, 11, 12) et un oscillateur interne de l'abonné restent connectés, et le reste de l'abonné est déconnecté.

5. Procédé selon l'une des revendications précédentes, **caractérisé en ce que**, outre les au moins deux codes d'en-tête (14) spécifiques, il existe au moins un autre code d'en-tête pour la synchronisation des abonnés dans le réseau de communication et/ou pour la distinction entre des canaux de gauche et de droite.

6. Procédé selon l'une des revendications précédentes, **caractérisé en ce que**, entre deux abonnés (1, 2, 3, 4) de la ligne annulaire, les données sont transmises de manière optique par l'intermédiaire des guides optiques (5, 6, 7, 8).

7. Procédé selon l'une des revendications précédentes, **caractérisé en ce qu'**au moins une partie des abonnés (1, 2, 3, 4) passe en mode d'économie de courant par le biais d'une instruction spécifique transmise par la ligne annulaire.

8. Procédé selon l'une des revendications précédentes, **caractérisé en ce que**, après une durée déterminée d'inactivité, au moins une partie des abonnés (1, 2, 3, 4) passe automatiquement en mode d'économie de courant.

9. Utilisation du procédé selon l'une des revendications précédentes dans un système de communication à l'intérieur d'un véhicule automobile.
